# EUROPEAN PATENT SPECIFICATION

(11) **EP 2 248 861 B1**
(45) Date of publication and mention of the grant of the patent: **27.03.2013**
(21) Application number: 10161973.2
(22) Date of filing: 05.05.2010
(51) Int. Cl.: C09D 11/00, C09D 11/10

(54) **Ink composition for ink jet recording**
Tintenzusammensetzung zur Tintenstrahlaufzeichnung
Composition d'encre pour enregistrement par jet d'encre

(30) Priority: 07.05.2009 JP 2009112754
(43) Date of publication of application: 10.11.2010
(73) Proprietor: Seiko Epson Corporation, Shinjuku-ku Tokyo (JP)
(72) Inventor: Oki, Yasuhiro, Nagano 392-8502 (JP); Yatake, Masahiro, Nagano 392-8502 (JP); Nagase, Makoto, Nagano 392-8502 (JP); Masuda, Motoki, Nagano 392-8502 (JP)
(74) Representative: HOFFMANN EITLE

(56) References cited:
- EP-A1- 1 333 074
- EP-A2- 1 193 078
- WO-A1-2006/095909
- WO-A1-2009/011692
- US-A1- 2002 193 464

## Description

### BACKGROUND

### 1. Technical Field

The invention relates to an ink composition for ink jet recording, and more particularly to an ink composition for ink jet recording which is excellent in color developability and fixability, especially excellent as an ink jet recording ink for textiles, and which is good in jet stability and clogging recovery.

### 2. Related Art

As a colorant for ink jet recording ink, a pigment is used because it is excellent in fastness such as water resistance and light resistance. Since the pigment has a poor solubility in water, a dispersing agent such as a surfactant and a polymer is added to the ink to improve dispersion stability of the pigment. As the dispersing agent, a resin having both a hydrophobic portion and a hydrophilic portion, such as a styrene acrylic copolymer resin, is generally used.

As for the ink used in ink jet recording, there are many requirements in terms of printing quality. For example, it is required that the ink does not exhibit blotching, is not easily dried up, and can be evenly printed on various kinds of recording media, and neighboring colors of ink are not mixed up in color printing. For such a reason, various additives are added to the ink to improve the printing quality. For example, US Patent 5,156,675 discloses an ink to which a glycol ether such as diethylene glycol mono-butyl ether is added to suppress blotching by improving permeability to a recording medium, US Patent 5,183,502 discloses an ink to which an acetylene glycol based surfactant is added, and US Patent 5,196,056 discloses an ink to which both of the above are added.

However, as for the ink to which a pigment dispersing agent is added, if the surfactant and glycol ether exist in the ink, there is a likelihood that absorption and desorption of a dispersing resin to and from the pigment easily occur and thus storage stability of the ink becomes unsatisfactory. If the dispersing agent detached from the pigment is present in the ink, there is a likelihood that the viscosity of the ink becomes higher and thus jet stability of the ink and clogging recovery become unsatisfactory.

### SUMMARY

The inventors realized that it is possible to produce an ink jet recording ink which is excellent in color developability and fixability, especially excellent as an ink jet recording ink for textiles, and which is excellent in jet stability and clogging recovery by adding certain polymer microparticles to an ink composition containing a pigment dispersoid having a certain particle diameter. The invention is based on this knowledge.

It is an object of the invention to provide an ink composition for ink jet recording which is excellent in color developability and fixability, especially excellent as an ink jet recording ink for textiles, and which is excellent in jet stability and clogging recovery.

According to one aspect of the invention, there is provided an ink composition for ink jet recording which contains at least (a) a dispersoid comprising a water-dispersible pigment and (b) polymer microparticles, in which the average dispersion diameter (the cumulative 50% diameter as measured by light scattering) of the is 20 to 300 nm, wherein the polymer microparticles comprise a copolymer comprising (i) at least 70% by weight of an alkyl (meth) acrylate comprising ethyl acrylate repeating units and (ii) (meth) acrylic acid repeating units, and (iii) repeating units of an ethylenic unsaturated monomer having a saturated or an unsaturated ring, wherein the glass transition temperature thereof is 0°C or less and the acid value thereof is 50 mgKOH/g or less.

Accordingly, it is possible to realize an ink composition for ink jet recording which is excellent in color developability and fixability, especially excellent as an ink jet recording ink for textiles, and in jet stability and clogging recovery.

### DESCRIPTION OF EXEMPLARY EMBODIMENTS

The ink composition for ink jet recording according to the invention contains a dispersoid which can disperse a pigment in water and a polymer microparticle as essential components. Each of the components will be described below.

### Polymer microparticle

The polymer microparticle used in the ink jet recording ink according to the invention comprises a copolymer obtained by copolymerizing monomer components comprising (i) at least 70% by weight of an alkyl (meth) acrylate which comprises ethyl acrylate repeating units and (ii) (meth) acrylic acid repeating units, and (iii) repeating units of an ethylenic unsaturated monomer having a saturated or an unsaturated ring. By incorporating 70% by weight or more of alkyl (meth) acrylate containing ethyl acrylate into the ink, it is possible to improve abrasion fastness in both dry and wet abrasion when the ink is printed on a cloth for textiles. Further, thanks to the ethylenic unsaturated monomer having a saturated or an unsaturated ring contained therein, it is possible to improve the jet stability of ink.

As the alkyl (meth) acrylate, alkyl (meth) acrylate having 1 to 24 carbon atoms is preferably used. Examples thereof include methyl (meth) acrylate, ethyl (meth) acrylate, propyl (meth) acrylate, n-butyl (meth) acrylate, iso-butyl (meth) acrylate, pentyl (meth) acrylate, hexyl (meth) acrylate, diethyl (meth) acrylate, octyl (meth) acrylate, nonyl (meth) acrylate, decyl (meth) acrylate, lauryl (meth) acrylate, iso-boronyl (meth) acrylate, cetyl (meth) acrylate, stearyl (meth) acrylate, iso-stearyl (meth) acrylate, and behenyl (meth) acrylate. One or more kinds of alkyl (meth) acrylates can be used but ethyl acrylate is contained as an essential monomer component according to the invention. It is preferable to contain 60% to 80% by weight of ethyl acrylate as a monomer component. With the ethyl acrylate in such a range, it is possible to further improve color developability and fixability when the ink is used for textiles.

As the cyclic alkyl (meth) acrylate, alkyl (meth) acrylate having 3 to 24 carbon atoms is preferably used. Examples thereof include t-butyl cyclohexyl (meth) acrylate, tetramethylpiperidyl (meth) acrylate, dicyclopentanyl (meth) acrylate, and dicyclopentanyloxy (meth) acrylate.

Examples of the ethylenic unsaturated monomer having a saturated or an unsaturated ring include styrene, α-methyl styrene, p-hdroxy styrene, o-chlorostyrene, and limonene. Among those, styrene is preferably used.

It is preferable that the content ratio of (i) the alkyl (meth) acrylate repeating units to (iii) repeating units of the ethylenic unsaturated monomer having a saturated or an unsaturated ring is in the range of 3:1 to 10:1. By setting the content ratio of both monomers, it is possible to achieve a good balance of fastness and jet stability in the case of textile printing.

The polymer microparticle prepared by copolymerizing the above monomers has a glass transition temperature of 0°C or below. As the polymer microparticle having the glass transition of 0°C or below is used, not only fixability but also jet stability of the pigment serving as the ink jet recording ink especially for textiles are improved. A preferable glass transition temperature is in the range of -5°C to -25°C. The glass transition temperature means a value measure based on Japanese Industrial Standard (JIS) K6900.

The polymer microparticle used in the invention has an acid value of 50 mgKOH/g or less. As the polymer microparticle having an acid value of 50 mgKOH/g or less is used, the fixability of the pigment is improved and washing fastness in the case of textile printing is improved. A preferable acid value is 30 mgKOH/g or less.

It is preferable that the polymer microparticle used in the invention is composed of a polymer having a styrene based weight average molecular weight of 100,000 to 1,000,000 measured by gel permeation chromatography. By using the polymer microparticle having a molecular weight of 100,000 or more, the fixability of the pigment is improved and the washing fastness is also improved especially in the case of textile printing. By using a molecular weight no larger than 1,000,000, the fixability and the jet stability can be optimized.

It is preferable that the average particle diameter of the polymer microparticle is 50 to 500 nm. By using the polymer microparticle having such a size, it is possible to achieve a good balance of excellent color developability and fastness. A more preferable average particle diameter is 60 to 300 nm. In the invention, the average particle diameter is measured by a light scattering method, means an average value of dispersion diameters (cumulative 50% diameter) of polymer microparticles which are present in the form of particles in ink, and can be measured, for example, with Microtrac UPA (Microtrac Inc.).

As for a method of copolymerizing the above monomers, as a solvent, an alcohol based solvent, a ketone based solvent, an ester based solvent, a glycol ether based solvent can be used. However, the solvent is required to be able to be removed later for water based pigment dispersion. Examples of the alcohol based solvent satisfying the requirements include methanol, ethanol, iso-propanol, 1-butanol, tertiary butanol, iso-butanol, diacetone alcohol, and the like. Examples of the ketone based solvent include acetone, methyl ethyl ketone, diethyl ketone, methyl isobutyl ketone, and cyclohexanone. Examples of the ether based solvent include dibutyl ether, tetrahydrofuran, and dioxane. Examples of the glycol ether based solvent include ethylene glycol mono-methyl ether, diethylene glycol mono-methyl ether, diethylene glycol mono-ethyl ether, diethylene glycol diethyl ether, and butyl cellosolve.

As a radical polymerization initiator for polymerizing polymers, an organic peroxide such as t-butyl peroxy (2-ethylhexanoate), di-t-butylperoxide, t-butylperoxybenzoate, t-butylperoxyoctoate; an azo compound such as 2,2'-azobisisobutyronitrile, 2,2'-azobis(2,4-dimethylvaleronitrile), dimethyl-2,2'-azobisbutylate, 2,2'-azobis (2-methylbutyronitrile); potassium persulfate; and a soda persulfate can be used but the radical copolymerization initiator is not limited to the above. Other initiators can be also used as long as they have a radical polymerizing characteristic. It is preferable that the use of the radical polymerization initiator is 0.01 mol% or more and 5 mol% or less with respect to the monomer used in polymerization. A polymerization temperature is not specifically limited, but a polymerization temperature is generally in the range of 30 to 100°C, and more preferably in the range of 40 to 90°C. If the polymerization temperature is far below the range, it takes a long time to perform the monomer polymerization and thus, in some cases, there is possibility that a large amount of monomer still remains after the polymerization because the polymerization rate is lowered.

As for the polymer microparticle used in the invention, it is preferable that a larger amount of the polymer microparticle is contained than the pigment on the basis of weight. By adding a larger amount of polymer microparticle than the pigment on the basis of weight, the fixability of the pigment as the ink jet recording ink especially for textiles is improved.

### Pigment dispersoid

The ink composition according to the invention comprises a dispersoid comprising a water-dispersible pigment. The dispersoid exists in the form of microparticles having an average particle diameter of 20 to 300 nm in an ink. By using a pigment dispersoid having such a particle diameter, it is possible to achieve a good balance of excellent color developability and fastness. The average particle diameter is preferably 70 to 230 nm, and more preferably 80 to 130 nm. In the invention, the average particle diameter is measured by a light scattering method and means an average value of dispersion diameters (cumulative 50% diameter) of dispersed particles in the ink. For example, it can be measured by Microtrac UPA (Microtrac Inc.)

As a dispersing agent for dispersing the pigment, a copolymer resin of a hydrophilic monomer and a hydrophobic monomer can be suitably used. Specific examples of the hydrophobic monomer for the copolymer resin include methyl acrylate, methyl methacrylate, ethyl acrylate, ethyl methacrylate, n-propyl acrylate, n-propyl methacrylate, iso-propyl methacrylate, iso-propyl methacrylate, n-butyl acrylate, n-butyl methacrylate, sec-butyl acrylate, sec-butyl methacrylate, tert-butyl acrylate, tert-butyl methacrylate, n-hexyl acrylate, n-hexyl methacrylate, n-octyl acrylate, n-octyl methacrylate, iso-octyl acrylate, iso-octyl methacrylate, 2-ethyl hexyl acrylate, 2-ethyl hexyl methacrylate, decyl acrylate, decyl methacrylate, lauryl acrylate, lauryl methacrylate, stearyl acrylate, stearyl methacrylate, 2-hydroxy ethyl acrylate, 2-hydroxy ethyl methacrylate, 2-hydroxy propyl acrylate, 2-hydroxy propyl methacrylate, 2-dimethyl aminoethyl acrylate, 2-dimethyl aminoethyl methacrylate, 2-diethyl aminoethyl acrylate, 2-diethyl aminoethyl methacrylate, glycidyl acrylate, glycidyl methacrylate, aryl acrylate, aryl methacrylate, cyclohexyl acrylate, cyclohexyl methacrylate, phenyl acrylate, phenyl methacrylate, nonylphenyl acrylate, nonylphenyl methacrylate, benzyl acrylate, benzyl methacrylate, dicyclopentenyl acrylate, dicyclopentenyl methacrylate, boronyl acrylate, boronyl methacrylate, 1,3-butaneoliol diacrylate, 1,3-butaneoliol dimethacrylate, 1,4-butandionyl diacrylate, 1,4-butandionyl dimethacrylate, ethylene glycol diacrylate, ethylene glycol dimethacrylate, diethylene glycol diacrylate, diethylene glycol dimethacrylate, tetraethylene glycol diacrylate, triethylene glycol dimethacrylate, triethylene glycol diacrylate, tetraethylene glycol dimethacrylate, polyethylene glycol diacrylate, polyethylene glycol dimethacrylate, neopentyl glycol diacrylate, 1,6-hexdandiol diacrylate, 1,6-hexanediol dimethacrylate, dipropylene glycol diacrylate, dipropylene glycol dimethacrylate, trimethylol propane triacrylate, trimethylol propane trimethacrylate, glycerol acrylate, glycerol methacrylate, styrene, methyl styrene, and vinyl toluene. Among those, benzyl acrylate is preferably used.

Specific examples of the hydrophilic monomer include acrylic acid, methacrylic acid, maleic acid, and itaconic acid. Among those, methacrylic acid and/or acrylic acid is/are preferably used.

The above mentioned copolymer resin preferably may be a resin obtained by copolymerizing benzyl acrylate and methacrylic acid and/or acrylic acid. By using the pigment dispersoid agent and the above-mentioned polymer microparticle in combination, it is possible to realize a high quality of print comparable to a silver salt in terms of gloss of a color image, prevention of bronzing, jet stability, prevention of clogging, and stability in color development. The content of the benzyl acrylate is preferably 50% by weight or more, and the content of the metacrylic acid and/or acrylic acid are/is 15% by weight or less. The most preferable content of benzyl acrylate is 50% to 90% by weight.

The acid value of the dispersion resin is preferably 20 to 150 mgKOH/g and more preferably 30 to 150 mgKOH/g. If the acid value is less than 10 mgKOH/g, the pigment is difficult to disperse and stability thereof deteriorates too. On the other hand, if the acid value exceeds 200 mgKOH/g, the hydrophilic property becomes stronger, and weather resistance and optical density (OD) on plain paper deteriorate.

The dispersion resin preferably has a styrene-based weight average molecular weight of 10,000 to 200,000 measured by gel permeation chromatography. By setting the molecular weight of the dispersing resin in the above range, it is possible to achieve a good balance of the fixability and dispersing stability of the pigment.

The dispersoid can be prepared through known methods. For example, as a method of adding monomers upon polymerizing, there are examples in which all of the components may be added in the early stage of reaction or at least one of the components may be continuously or intermittently added to a reaction system. It is preferable that the polymerization is performed in the presence of a radical polymerization initiator and/or a catalyst.

As a solvent used in the polymerization, an alcohol based solvent, a ketone based solvent, an ether based solvent, and a glycol ether based solvent are preferably used. As the alcohol based solvent, there are, for example, methanol, ethanol, isopropanol, 1-butanol, tertiary butanol, iso-butanol, diaceton alcohol, and the like. As the ketone-based solvent, there are, for example, acetone, methyl ethyl ketone, diethyl ketone, methyl isobutyl ketone, and cyclohexanone. As the ether based solvent, there are, for example, dibutyl ether, tetrahydrofuran, and dioxane. As the glycol ether based solvent, there are, for example, ethylene glycol monomethyl ether, diethylene glycol mono-methyl ether, diethylene glycol mono-ethyl ether, diethylene glycol diethyl ether, and butyl cellosolve.

As the radical polymerization initiator, an organic peroxide such as t-butyl peroxy (2-ethylhexanoate), di-t-butyl peroxide, t-butyl peroxy benzoate, and t-butyl peroxy octoate; and an azo compound such as 2,2'-azobisisobutyronitrile, 2,2'-azobis(2,4-dimethylvaleronitrile), dimethyl-2,2'-azobisbutylate, 2,2'-azobis (2-methylbutyronitrile) are preferably used. The preferable usage of the radical polymerization initiator is not less than 0.01 mol% and not greater than 5 mol% to the monomer used when polymerizing.

The polymerization temperature is not specifically limited but it is typically in the range of 30 to 100°C. A preferable polymerization temperature is in the range of 40 to 90°C. When the polymerization temperature is far below the range, there is a possibility that the polymerization rate of the monomers is lowered.

The content of the dispersion resin is preferably in the range of 10 to 50 parts by mass with respect to 100 parts by mass of pigment in terms of color developability, fixability, and storage stability of an ink composition, and more preferably in the range of 10 to 35 parts by mass.

### Pigment

As the pigment usable in the ink jet recording ink composition of the invention, a carbon black (C. I. pigment black 7) such as furnace black, lamp black, acetylene black, and channel black are preferably used for a black ink. However, metals such as cupric oxide, ferrioxide (C. I. pigment black 11), and titanium oxide and organic pigments such as aniline black (C. I. pigment black 1) can be also used.

For a color ink, the followings can be used. Examples of pigments that can be used for a color ink include C. I. pigment yellow 1 (fast yellow G), 3, 12 (disazo yellow AAA), 13, 14, 17, 24, 34, 35, 37, 42 (yellow ferrioxide), 53, 55, 74, 81, 83 (disazo yellow HR), 93, 94, 95, 97, 98, 100, 101, 104, 108, 109, 110, 117, 120, 128, 138, 153, 155, 180, 185, C.I. pigment red, 1, 2, 3, 5, 17, 22 (brilliant fast scarlet), 23, 31, 38, 48:2 (permanent red 2B (Ba)), 48:2 (permanent red 2B (Ca)), 48:3 (permanent red 2B (Sr)), 48:4 (permanent red 2B (Mn)), 49:1, 52:2, 53:1, 57:1 (brilliant carmine 6B), 60:1, 63:1, 63:2, 64:1, 81 (rhodamine 6G lake), 83, 88, 101 (red oxide), 104, 105, 106, 108 (cadmium red), 112, 114, 122 (quinacridone magenta), 123, 146, 149, 166, 168, 170, 172, 177, 178, 179, 185, 190, 193, 202, 206, 209, 219, C. I. pigment violet 19, 23, C. I. pigment orange 36, C. I. pigment blue 1, 2, 15 (phthalocyanine blue R), 15:1, 15:2, 15:3 (phthalocyanine blue G), 15:4, 15:6 (phthalocyanine blue E), 16, 17:1, 56, 60, 63, C. I. pigment green 1, 4, 7, 8, 10, 17, 18, and 36. That is, various kinds of pigments can be used as a colorant.

The additive amount of the pigment used for the ink jet recording ink of the invention is preferably 0.5% to 30% by weight. With the additive amount below the range, it is impossible to obtain good print density. If the additive amount exceeds the range, there is a possibility that viscosity becomes higher, a structural viscosity is created in a viscosity property, and jet stability of ink from an ink jet head deteriorates.

It is preferable that the pigment is added to the ink composition in the form of pigment dispersoid in which the dispersion resin and the pigment are mixed from the viewpoint of excellent storage stability of an ink composition and formation of an image excellent in glossiness.

A manufacturing method of the pigment dispersoid includes a pretreatment process for miniaturizing or harmonizing the pigment particle diameter by leaving untended or milling processing, and a dispersing process for dispersing the pigment by using a bead mill or a collision type jet crusher after adding a copolymer resin thereto, and may further include a post-treatment process for adding an urethane resin and a cross-linking agent thereto and performing cross-linking processing in certain instances. After the pretreatment process and before the dispersing process, it is preferable to perform a neutralizing process by adding an alkaline compound to the pigment.

The dispersing process is preferably performed by a bead mill or a collision type jet crusher as described above. As for the bead mill, either a fine milling type or a normal milling type may be used. By appropriately adjusting the dispersing process condition, the dispersing process is performed until the copolymer resin comes to have a desirable particle diameter. In the dispersing process, kneading may be performed in the presence of an organic solvent if it is needed. Through these processes, the copolymer resin is securely fixed to the surface of the pigment.

After the dispersing process, it is preferable that the post treatment process follows an impurity removing process which is performed with ion exchange processing or ultra-filtration processing. Through the ion exchange processing, an ionic material (divalent metal ions) such as cations and anions can be removed. By ultrafiltration treatment, dissolved impurities (residuals remaining when the pigment is synthesized, an excessive amount of components in the composition of the dispersion solution, a resin remaining unfixed to the organic pigment, and contaminant components) can be removed. In the ion exchange treatment, a typically known ion exchange resin is used. In the ultrafiltration treatment, a known ultrafiltration membrane filter is used. As the filter, either a normal type or a double performance type may be used.

In the post treatment process, a urethane resin and a cross-linking agent are added thereto to cause cross-linking reaction. Thus, the copolymer resin and the urethane resin are cross-linked by the cross-linking agent, and the surface of the pigment is coated (capsulation). As a result, it is possible to improve stability in time and adhesiveness, and lower viscosity, and stabilize the pigment dispersion solution.

### Mater and other components

The ink composition of the invention contains water as a main solvent. As the water, pure water such as ion-exchanged water, ultrafiltrated water, reverse osmosis water, and distilled water, or ultrapure water can be used. In particular, water sterilized, for example, by ultraviolet irradiation or the addition of hydrogen peroxide is free from mold or bacteria in the case of using the ink composition for a long period of time and is therefore preferred.

The ink composition of the invention preferably further contains 1,2-alkylene glycol. By adding 1,2-alkylene glycol, blotching is reduced and print quality is improved. Further, if it is used in combination with the polymer microparticles and the dispersion resin, color developability is improved. As 1,2-alkylene glycol, 1,2-alkylene glycol having 5 or 6 carbon atoms such as 1,2-hexan diol, 1,2-pentane diol, 4-methyl-1,2-pentane diol are preferably used. Among those, 1,2-hexane diol and 4-methyl-1,2 pentane diol which have 6 carbon atoms are more preferably used. The additive amount of 1,2-alkylene glycol is preferably 0.3% to 30% by weight with respect to the total amount of ink, and more preferably 0.5% to 10% by weight.

The ink composition of the invention also preferably contains an aqueous organic solvent which is compatible with water and can dissolve and disperse a pigment, a pigment dispersing agent, the polymer contained in the ink composition, a pH adjusting agent, and other components which will be described below and can keep them stably dissolved and dispersed.

Preferable examples of the aqueous organic solvent which can improve a solubility of glycol esters and other components which have poor solubility in water, improve permeability to a recording medium (for example, paper), and have a function of preventing nozzle-clogging include alkyl alcohols having 1 to 4 carbon atoms such as ethanol, methanol, butanol, propanol, and isopropanol; glycol ethers such as ethylene glycol mono-methyl ether, ethylene glycol mono-ethyl ether, ethylene glycol mono-butyl ether, ethylene glycol mono-methyl ether acetate, diethylene glycol mono-methyl ether, diethylene glycol mono-ethyl ether, diethylene glycol mono-n-propyl ether, ethylene glycol mono-iso-propyl ether, diethylene glycol mono-lso-propyl ether, ethylene glycol mono-n-butyl ether, diethylene glycol mono-n-butyl ether, triethylene glycol mono-n-butyl ether, ethylene glycol mono-t-butyl ether, diethylene glycol mono-t-butyl ether, 1-methyl-1-metoxybutanol, propylene glycol mono-methyl ether, propylene glycol mono-ethyl ether, propylene glycol mono-t-butyl ether, propylene glycol mono-n-propyl ether, propylene glycol mono-iso-propyl ether, dipropylene glycol mono-methyl ether, dipropylene glycol mono-ethyl ether, dipropylene glycol mono-n-propyl ether, dipropylene glycol mono-iso-propyl ether, propylene glycol mono-n-butyl ether, and dipropylene glycol mono-n-butyl ether; foramide; acetamid; dimethylsulfoxide; solbitol; sorbitan; acetin; diacetin; triacetin; sulfolane; and compounds of the above.

According to the invention, among the above permeating organic solvents, it is preferable to use di-ethylene glycol mono-butyl ether, tri-ethylene glycol mono-butyl ether, propylene glycol mono-butyl ether, di-propylene glycol mono-butyl ether, di-ethylene glycol mono-pentyl ether, tri-ethylene glycol mono-pentyl ether, di-ethylene glycol mono-hexyl ether, or tri-ethylene glycol mono-hexyl ether. By using the polymer, the polymer dispersing agent, and the glycol ethers in combination, it is possible to reduce blotching and improve print quality.

For the same purpose as above, sugar can be used. Examples of sugars include monosaccharides and polysaccharides. Examples thereof include alginic acid and its salt, and cyclodextrins, and celluloses in addition to glucose, mannose, fructose, ribose, xylose, arabinose, lactose, galactose, aldonic acid, glucitose, maltose, cellobiose, sucrose, trehalose, and maltoriose. The additive amount of the sugar can be appropriately determined, and is preferably 0.05% to 30% by weight. By setting the additive amount in such a range, it is possible to easily achieve a suitable viscosity of ink composition at which clogging is easily repaired even when the ink composition is dried at a forward end of a head and stable printing can be performed. According to the invention, the more preferable additive amount of glucose, mannose, fructose, ribose, xylose, arabinose, lactose, galactose, aldonic acid, glucitose, maltose, cellobiose, sucrose, trehalose, and maltoriose is 3% to 20% by weight. Further, since addition of alginic acid or its salt and cellulose tends to increase viscosity of the ink composition, the additive amount thereof must be carefully determined.

Moreover, the ink composition according to the invention preferably further contains a surfactant to control permeability. The added surfactant is preferably compatible with other components in the ink composition. That is, it is preferable that the surfactant has a high permeability and stability. As the surfactant, ampholytic surfactant and anionic surfactant may be preferably used.

Preferable examples of the ampholytic surfactant include lauryl dimethyl aminoacetate betaine, 2-alkyl-N-carboxylmethyl-N-hydroxyethylimidazolium betaine, coconut oil, fatty acid amid propyl dimethyl aminoacetic betaine, polyoctyl polyaminoethyl glycine, and imidazolin derivatives.

Preferable examples of the anionic surfactant include an acetylene glycol based surfactant; an acetylene alcohol based surfactant; ethers such as polyoxyethylene nonylphenyl ether, polyoxyethylene octylphenyl ether, polyoxy ethylene dodecylphenyl ether, polyoxy ethylene alkylaryl ether, polyoxyethyleneoleyl ether, polyoxyethylene lauryl ether, polyoxyethylene alkyl ether, and polyoxy alkylene alkyl ether; esters such as polyoxyethylene oleic acid, polyoxyethylene oleic acid ester, polyoxyethylene distearate ester, solbitan laurate, solbitan monostearate, solbitan monooleate, solbitan sesquioleate, polyoxyethylene monooleate, and polyoxyethylene stearate; silicon based surfactants such as dimethyl polysiloxane; and other fluorine based surfactants such as other fluorine alkyl esters and perfluoroalkyl carboxylate. Especially acetylene glycol based surfactant and acethylene alcohol based surfactant are preferably used. In the case in which these surfactants are added to the ink composition, the ink has weak foaming property and excellent anti-foaming property. Specific examples of the acetylene glycol based surfactant and the acetylene alcohol based surfactant include 2,4,7,9-tetramethyl-5-decyne-4,7-diol, 3,6,-dimethyl-4-octine-3,6-diol, and 3,5-dimethyl-1-hexine-3ol. Examples of commercially available surfactant include Surfynol (trademark) 61, 82, 104, 465, 485, and TG manufactured by Air Products and Chemicals Inc. (England) and Olfin STG (trademark) and Olfin E1010 (trademark) manufactured by Nissin Chemical Industry Co., Ltd.

The additive amount of the surfactant is 0.01% by weight or more and 3% by weight or less with respect to the total amount of ink composition, and a preferable maximum value is 2.0% by weight and a preferable minimum value is 0.05% by weight.

According to the invention, among the above surfactants, an acetylene glycol based surfactant and/or an acetylene alcohol based surfactant are preferably used. By using the acetylene glycol based surfactant and/or the acetylene alcohol based surfactant, it is possible to further reduce blotching and improve print quality. The acetylene glycol based surfactant and/or acetylene alcohol based surfactant in the invention are preferably selected from the group consisting of alkylene oxide additives of 2,4,7,9-tetramethyl-5-decine-4,7-diol and 2,4,7,9-tetramethyl-5-decine-4,7-diol, and the alkylene oxide additives of 2,4-dimethyl-5-decine-4-ol and 2,4-dimethyl-5-decine-4-ol. These acetylene glycol based surfactants and the acetylene alcohol based surfactant are obtainable as Olfin 104 series and Olfin E series such as Olefin E1010 (trademark) manufactured by Air products and chemicals Inc. and Surfynol 465 (trademark) or Surfynol 61 (trademark) manufactured by Nissin Chemical Industry Co., Ltd. Thanks to these additives, it is possible to improve the print drying properties and accomplish high speed printing.

The ink composition of the invention can reduce blotching by using plural surfactants such as 1,2-alkylene glycol and acetylene glycol based surfactant and/or acetylene alcohol based surfactant, and glycol ether and acetylene glycol based surfactant and/or acetylene alcohol based surfactant.

The ink composition of the invention may further contain a pH buffer agent, an antioxidant, an ultraviolet ray absorbing agent, a mildew proofing agent or an anticeptic agent, and a chelating agent if needed. Specific examples of the pH buffer agent include collidine, imidazole, phosphoric acid, 3-(N-morpholino) propane sulfonic acid, tris(hydroxymethyl)aminomethane, and boric acid.

Specific examples of the antioxidant or the ultraviolet ray absorbing agent include allophanates such as allophanate and methylallophanate; biurets such as biuret, dimethylbiuret, and tetramethylbiuret; L-ascorbic acids and their salts; Tinuvin328, 900, 1130, 384, 292, 123, 144, 622, 770, and 292, Irgacor252 and 153, Igranox1010, 1076, 1035, and MD1024 which are manufactured by CibaSpecialty Chemicals Corp.; and a lanthanide oxide.

Specific examples of the mildew proofing agent and anticeptic agent include sodium benzoate, pentachlorophenol sodium salt, 2-pyridinethiol-1-oxide sodium, sodium sorbate, sodium dehydroacetate, and 1,2-dibenzothiazolin-3-one(Proxel GXL, Proxel XL-2, Proxel LV, Proxel AQ, Proxel BD20, Proxel DL manufactured by Arch Chemical, Inc.). A specific example of the chelating agent is ethylene diamine tetraacetate (EDTA).

### Manufacturing method of ink composition

The ink composition of the invention may be prepared by supplying the above components into a dispersing/mixing machine (for example, a ball mill, a sand mill, an Atrita mill, a basket mill, and a roll mill), and dispersing them therein. According to the preferred embodiment of the invention, an ink raw material obtained by the dispersing and mixing apparatus is filtered through a filter such as a membrane filter or a mesh filter so that coarse particles are removed.

### Inkjet recording method and apparatus

An ink jet recording method using the ink composition of the invention is a method of printing by discharging liquid droplets of the ink composition and attaching the liquid droplets to a heated recording medium. Examples of discharging methods of liquid droplets of ink composition include a method of recording characters and symbols on the surface of a recording medium by intermittently discharging ink stored in a nozzle head portion by converting an electrical signal to a mechanical signal with an electrostrictive element, and a method of recording characters and symbols on the surface of a recording medium by intermittently discharging ink by the way of volume expansion by using bubbles generated by very rapidly heating the ink stored in a nozzle head portion at a place nearest an ink discharging portion. According to the invention, it is preferable to discharge ink by a method, which does not depend on heating, such as a method of using an electrostrictive element such as a piezoelectric element. In the case of using an element depending on heating such as a thermal head, polymer as additives or polymer as a pigment dispersing agent are altered in the properties thereof, resulting in deterioration of jet stability. Especially in the case of discharging ink at a mass volume for a long period of time, for example, ink jet ink for textiles, it is particularly preferable to use an electrostrictive element which does not depend on heating.

### Examples

Hereinafter, the invention will be described with reference to examples in detail, but the invention is not restricted thereto.

### Preparation of polymer microparticles

### Emulsion A

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. 0.05 parts of a monomer solution of sodium lauryl sulfate, 30 parts of ethyl acrylate, 8 parts of butyl acrylate, 5 parts of styrene, and 0.02 parts of and t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction mixture of 30 parts of ion-exchanged water, 0.2 parts of potassium lauryl sulfate, 40 parts of ethyl acrylate, 5 parts of butyl acrylate, 2 parts of methacrylic acid, 10 parts of styrene, and 0.5 parts of t-dodecyl mercaptan was added thereto at 70°C under stirring to perform polymerization reaction. The mixture was neutralized with sodium hydroxide after polymerization reaction. The pH was adjusted to 8 to 8.5. The mixture is filtered through a 0.3 µm filter to prepare an aqueous polymeric microparticle dispersion (EM-A). After part of the aqueous polymeric microparticle dispersion was dried, the glass transition temperature was measured with a differential scanning calorimeter (EXSTAR 6000DSC, manufactured by Seiko Instruments Inc.) and found to be - 15°C. The molecular weight in terms of styrene by using THF as a solvent was measured by gel permeation chromatography (GPC) (L7100, manufactured by Hitachi, Ltd.) and found to be 200,000. The acid value was measured by a titration method and found to be 10 mg KOH/g.

### Emulsion B

100 parts of ion-exchanged water was charged into a reaction vessel equipped with a dropping device, a thermometer, a water-cooled reflux condenser, and a stirrer. 0.2 parts of potassium persulfate serving as a polymerization initiator is added thereto under stirring at 70°C in a nitrogen atmosphere. A monomer solution of 0.05 parts of sodium lauryl sulfate, 30 parts of ethyl acrylate, 5 parts of butyl acrylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution composed of 30 parts of ion-exchanged water, 0.2 parts of potassium lauryl sulfate, 43 parts of ethyl acrylate, 1 part of hydroxyl ethyl metacrylate, 1 part of acrylic acid, 15 parts of styrene, and 0.5 parts of t-dodecyl mercaptan was added thereto at 70°C under stirring to perform polymerization reaction. The mixture was neutralized with sodium hydroxide. The pH was adjusted to 8 to 8.5. The mixture was filtered through a 0.3 µm filter to prepare an aqueous polymeric microparticle dispersion (EM-B). A glass transition temperature, a molecular weight in terms of styrene, and an acid value of EM-B are measured in the same manner above and found to be -13°C, 220,000, and 10 mgKOH/g, respectively.

### Emulsion C

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. 0.05 parts of a monomer solution of sodium lauryl sulfate, 30 parts of ethyl acrylate, 10 parts of butyl acrylate, 8 parts of ethyl carbitol alkylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction mixture of 30 parts of ion-exchanged water, 0.2 parts of potassium lauryl sulfate, 30 parts of ethyl acrylate, 5 parts of butyl acrylate, 2 parts of acrylic acid, 10 parts of styrene, and 0.5 parts of t-dodecyl mercaptan was added thereto at 70°C under stirring to perform polymerization reaction. The mixture was neutralized with sodium hydroxide. The pH was adjusted to 8 to 8.5. The mixture was filtered through a 0.3 µm filter to prepare an aqueous polymeric microparticle dispersion (EM-C). A glass transition temperature, a molecular weight in terms of styrene, and an acid value of EM-C are measured in the same manner as above and found to be -10°C, 190,000, and 10 mgKOH/g, respectively.

### Emulsion D

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution which was a mixture of 0.05 parts of sodium lauryl sulfate, 30 parts of ethyl acrylate, 10 parts of butyl acrylate, 3 parts of butyl methacrylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 30 parts of ethyl acrylate, 11 parts of butyl acrylate, 1 part of acrylic acid, 10 parts of styrene, 0.5 parts of t-dodecyl mercaptan was added thereto at 70°C under stirring to perform polymerization reaction. The mixture was neutralized with sodium hydroxide after polymerization reaction. The pH was adjusted to 8 to 8.5. The mixture was filtered through a 0.3 µm filter to prepare an aqueous polymeric microparticle dispersion (EM-D). A glass transition temperature, a molecular weight in terms of styrene, and an acid value of EM-D are measured in the same manner as above and found to be -7°C, 150,000, and 10 mgKOH/g, respectively.

### Emulsion E

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution of 0.05 parts of sodium lauryl sulfate, 35 parts of ethyl acrylate, 3 parts of butyl acrylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 35 parts of ethyl acrylate, 3 parts of butyl acrylate, 5 parts of acrylic acid, 10 parts of styrene, and 0.5 parts of t-dodecyl mercaptan was added thereto at 70°C under stirring to perform polymerization reaction. After the polymerization reaction the mixture was neutralized with sodium hydroxide. The pH was adjusted to 8 to 8.5. The mixture was filtered through a 0.3 µm filter to prepare an aqueous polymeric microparticle dispersion (EM-E). A glass transition temperature, a molecular weight in terms of styrene, and an acid value of EM-E are measured in the same manner as described above and found to be -5°C, 200,000, and 50 mgKOH/g, respectively.

### Emulsion F

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A polymer solution of 0.05 parts of sodium lauryl sulfate, 40 parts of ethyl acrylate, 3 parts of 2-ethyl hexyl acrylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 40 parts of ethyl acrylate, 2 parts of butyl acrylate, 5 parts of methacrylic acid, 5 parts of styrene, and 0.5 parts of t-dodecyl mercaptan was added thereto at 70°C under stirring to perform polymerization reaction, and then the mixture was neutralized with sodium hydroxide. The pH was adjusted to 8 to 8.5. The mixture was filtered through a 0.3 µm filter to prepare an aqueous polymeric microparticle dispersion (EM-F). A glass transition temperature, a molecular weight in terms of styrene, and an acid value of EM-F are measured in the same manner as described above, and found to be -23°C, 300,000, and 30 mgKOH/g, respectively.

### Emulsion G

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution of 0.05 parts of sodium lauryl sulfate, 40 parts of ethyl acrylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 48 parts of ethyl acrylate, 3 parts of methacrylate, 4 parts of styrene, and 0.5 parts of t-dodecyl mercaptan was added thereto at 70°C under stirring to perform polymerization reaction, and then the mixture was neutralized with sodium hydroxide. The pH was adjusted to 8 to 8.5. The mixture was filtered through a 0.3 µm filter to prepare an aqueous polymeric microparticle dispersion (EM-G). A glass transition temperature, a molecular weight in terms of styrene, and an acid value of EM-G are measured in the same manner as described above, and found to be -19°C, 250,000, and 20 mgKOH/g, respectively.

### Emulsion H

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution of 0.05 parts of sodium lauryl sulfate, 30 parts of ethyl acrylate, 5 parts of methyl acrylate, 4 parts of ethyl carbitol acrylate, 5 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 20 parts of ethyl acrylate, 15 parts of butyl acrylate, 10 parts of hydroxyl ethyl methacrylate, 1 part of methacrylic acid, 10 parts of styrene, and 0.5 parts of t-dodecyl mercaptan was added thereto at 70°C under stirring to perform polymerization reaction, and then the mixture was neutralized with sodium hydroxide. The pH was adjusted to 8 to 8.5. The mixture was filtered through a 0.3 µm filter to prepare an aqueous polymeric microparticle dispersion (EM-H). A glass transition temperature, a molecular weight in terms of styrene, and an acid value of EM-H are measured in the same manner as described above, and found to be -7°C, 210,000, and 10 mgKOH/g, respectively.

### Emulsion I

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution of 0.05 parts of sodium lauryl sulfate, 30 parts of ethyl acrylate, 5 parts of methyl acrylate, 2 parts of butyl methacrylate, 10 parts of styrene, and 0.2 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 30 parts of ethyl acrylate, 4 parts of methyl acrylate, 3 parts of hydroxy ethyl methacrylate, 1 part of methacrylic acid, 15 parts of styrene, and 0.5 parts of t-dodecyl mercaptan was added thereto at 70°C under stirring to perform polymerization reaction, and then the mixture was neutralized with sodium hydroxide. The pH was adjusted to 8 to 8.5. The mixture was filtered through a 0.3 µm filter to prepare an aqueous polymeric microparticle dispersion (EM-I). A glass transition temperature, a molecular weight in terms of styrene, and an acid value of EM-I are measured in the same manner as described above, and found to be -2°C, 160,000, and 10 mgKOH/g, respectively.

### Emulsion J

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution of 0.05 parts of sodium lauryl sulfate, 40 parts of ethyl acrylate, 4 parts of styrene, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 40 parts of ethyl acrylate, 10 parts of 2-ethyl hexyl acrylate, 1 part of acrylic acid, 5 parts of styrene, and 0.5 parts of t-dodecyl mercaptan was added thereto at 70°C under stirring to perform polymerization reaction, and then the mixture was neutralized with sodium hydroxide. The pH was adjusted to 8 to 8.5. The mixture was filtered through a 0.3 µm filter to prepare an aqueous polymeric microparticle dispersion (EM-J). A glass transition temperature, a molecular weight in terms of styrene, and an acid value of EM-J are measured in the same manner as described above, and found to be -27°C, 230,000, and 20 mgKOH/g, respectively.

### Emulsion K

100 parts of ion-exchanged water was charged into a reaction vessel equipped with a dropping device, a thermometer, a water-cooled reflux condenser, and a stirrer. 0.2 parts of potassium persulfate serving as a polymerization initiator was added thereto under stirring at 70°C in a nitrogen atmosphere. A monomer solution of 0.05 parts of sodium lauryl sulfate, 30 parts of ethyl acrylate, 10 parts of butyl acrylate, 7 parts of ethyl carbitol acrylate, and 0.02 parts of t-dodecyl mercaptan in 7 parts of ion-exchanged water was added dropwise thereto at 70°C to perform reaction, preparing a primary material. 2 parts of a 10% ammonium persulfate solution was added to the primary material, followed by stirring. A reaction solution of 30 parts of ion-exchanged water, 0.2 parts of potassium lauryl sulfate, 40 parts of ethyl acrylate, 5 parts of methyl acrylate, 2 parts of methacrylic acid, 6 parts of styrene, and 0.5 parts of t-dodecyl mercaptan was added thereto at 70°C under stirring to perform polymerization reaction, and then the mixture was neutralized with sodium hydroxide. The pH was adjusted to 8 to 8.5. The mixture was filtered through a 0.3 µm filter to prepare an aqueous polymeric microparticle dispersion (EM-K). A glass transition temperature, a molecular weight in terms of styrene, and an acid value of EM-K are measured in the same manner as described above, and found to be -10°C, 270,000, and 10 mgKOH/g, respectively.

### Emulsion L

An aqueous polymeric microparticle dispersion (EM-L) was obtained in the same way as in Emulsion A except that the total amount of ethyl acrylate was replaced with hydroxyl ethyl methacrylate and the total amount of butyl acrylate was replaced with ethyl carbitol acetate. A glass transition temperature, a molecular weight in terms of styrene, and an acid value of EM-L are measured in the same manner as described above, and found to be -9°C, 180,000, and 10 mgKOH/g, respectively.

### Emulsion M

An aqueous polymeric microparticle dispersion (EM-M) was obtained in the same way as in Emulsion B except that the total amount of the acrylic acid was replaced with hydroxyl ethyl methacrylate. A glass transition temperature, a molecular weight in terms of styrene, and an acid value of EM-M are measured in the same manner as described above, and found to be -11°C, 160,000, and 10 mgKOH/g, respectively.

### Emulsion N

An aqueous polymeric microparticle dispersion (EM-N) was obtained in the same way as in Emulsion C except that the total amount of styrene was replaced with ethyl carbitol acrylate. A glass transition temperature, a molecular weight in terms of styrene, and an acid value of EM-N are measured in the same manner as described above, and found to be -14°C, 240,000, and 10 mgKOH/g, respectively.

### Emulsion O

An aqueous polymeric microparticle dispersion (EM-O) was obtained in the same way as in Emulsion D except that the total amount of the butyl acrylate was replaced with ethyl carbitol acrylate. A glass transition temperature, a molecular weight in terms of styrene, and an acid value of EM-O are measured in the same manner as described above, and found to be 2°C, 170,000, and 10 mgKOH/g, respectively.

### Emulsion P

An aqueous polymeric microparticle dispersion (EM-P) was obtained in the same way as in Emulsion E except that the additive amount of the acrylic acid was changed to 7 parts and the additive amount of the butyl acrylate was changed to 4 parts. A glass transition temperature, a molecular weight in terms of styrene, and an acid value of EM-P are measured in the same manner as described above, and found to be -3°C, 230,000, and 60 mgKOH/g, respectively.

### Emulsion Q

A monomer solution of 30 parts of benzyl acrylate, 1 part of acrylic acid, and 0.12 parts of t-dodecyl mercaptan was charged into a reaction vessel equipped with a dropping device, a thermometer, a water-cooled reflux condenser, and a stirrer, and heated at 70°C under stirring in a nitrogen atmosphere. An additionally prepared solution composed of 61 parts of benzyl acrylate, 6 parts of acrylic acid, 2 parts of butyl acrylate, 0.4 parts of t-dodecyl mercaptan, and 0.4 parts of sodium persulfate was charged into a dripping funnel and then added dropwise to a reaction solution, causing reaction. After 130 parts of water was additionally input into the reaction vessel, followed by stirring. The mixture was neutralized with sodium hydroxide so that pH was adjusted to 8 to 8.5. The mixture was filtered through a 0.3 µm filter to prepare an aqueous polymeric microparticle dispersion (EM-Q). A glass transition temperature, a molecular weight in terms of styrene, and an acid value of EM-Q are measured in the same manner as described above, and found to be 40°C, 200,000, and 20 mgKOH/g, respectively.

Specific components and properties of each monomer of Emulsions A to Q are shown in Table 1 below.

**Table 1**

| Monomer components | | Polymer microparticle (Emulsion) | | | | | | | | | | | | | | | | |
|---|---|---|---|---|---|---|---|---|---|---|---|---|---|---|---|---|---|---|
| | | A | B | C | D | E | F | G | H | I | J | K | L | M | N | O | P | Q |
| alkyl(meth)acrylate or cyclic alkyl(meth)acrylate (1) component | EA | 70 | 73 | 60 | 60 | 74 | 80 | 88 | 50 | 60 | 80 | 70 | - | 73 | 60 | - | 74 | - |
| | MA | - | - | - | - | - | - | - | 5 | 9 | - | 5 | - | - | - | - | - | - |
| | BA | 13 | 5 | 15 | 21 | 6 | 2 | - | 15 | - | - | 10 | - | 5 | 15 | - | 4 | 2 |
| | BMA | - | - | - | 3 | - | - | - | - | 2 | - | - | - | - | - | - | - | - |
| Other components | 2-EHA | - | - | - | - | - | 3 | - | - | - | 10 | - | - | - | - | - | - | - |
| | HEMA | - | 1 | - | - | - | - | - | 10 | 3 | - | - | 70 | 2 | - | - | - | - |
| | ECA | - | - | 8 | - | - | - | - | 4 | - | - | 7 | 13 | - | 23 | - | - | - |
| (Meth)acrylic acid | AA | - | 1 | 2 | 1 | 5 | - | - | - | - | 1 | - | - | - | 2 | - | 7 | 7 |
| | MAA | 2 | - | - | - | - | 5 | 3 | 1 | 1 | - | 2 | 2 | - | - | - | - | - |
| Ethylenic unsaturated monomer having a saturated or an unsaturated ring (2) component | St | 15 | 20 | 15 | 15 | 15 | 10 | 9 | 15 | 25 | 9 | 6 | 15 | 20 | - | - | 15 | - |
| | BzA | - | - | - | - | - | - | - | - | - | - | - | - | - | - | - | - | 91 |
| Content of (1)(wt%) | | 83 | 78 | 75 | 84 | 80 | 85 | 88 | 70 | 71 | 90 | 85 | 0 | 78 | 75 | 63 | 78 | 2 |
| (1)comp./(2)comp. | | 5.5 | 3.9 | 5 | 5.6 | 5.3 | 8.5 | 9.8 | 4.7 | 2.8 | 10 | 14.2 | - | 3.9 | - | 4.2 | 5.3 | 0.02 |
| Tg(°C) | | -15 | -13 | -10 | -7 | -5 | -23 | -19 | -7 | -2 | -27 | -10 | -9 | -11 | -14 | 2 | -3 | 40 |
| MW(10000) | | 20 | 22 | 19 | 15 | 20 | 30 | 25 | 21 | 16 | 23 | 27 | 18 | 16 | 24 | 17 | 23 | 20 |
| Acid value(mgKOH/g) | | 10 | 10 | 10 | 10 | 50 | 30 | 20 | 10 | 10 | 20 | 10 | 10 | 10 | 10 | 10 | 60 | 20 |

In table 1, EA represents ethyl acrylate, MA represents methyl acrylate, BA represents butyl acrylate, BMA represents butyl methacrylate, 2-EHA represents 2-ethyl hexyl acrylate, HEMA represents hydroxyl ethyl methacrylate, ECA represents ethyl carbitol acrylate, AA represents acrylic acid, MAA represents methacrylic acid, St represents styrene, and BzA represents benzyl acrylate.

### Preparation of pigment dispersoid

### Pigment dispersoid 1

Pigment Blue 15:3 (copper phthalocyanine pigment, manufactured by Clariant) was used as pigment. After an atmosphere in a reaction vessel equipped with a stirrer, a thermometer, a reflux condenser, and a dripping funnel was replaced with nitrogen, 75 parts of benzyl acrylate, 2 parts of acrylic acid, and 0.3 parts of t-dodecyl mercaptan were charged into the vessel, followed by heating to 70°C. An additionally prepared mixture of 150 parts of benzyl acrylate, 15 parts of acrylic acid, 5 parts of butyl acrylate, 1 part of t-dodecyl mercaptan, 20 parts of methyl ethyl ketone, and 1 part of sodium persulfate were charged into a dripping funnel, and it was dripped into the reaction vessel over 4 hours, causing polymerization reaction of a dispersion polymer. Next, methyl ethyl ketone was additionally charged into the reaction vessel to form a dispersion polymer solution of 40% concentration. Part of the polymer solution was dried and the glass transition temperature was measured with a differential scanning calorimeter (EXSTAR 6000DSC, manufactured by Seiko Instruments Inc.) and found to be 40°C.

40 parts of the dispersion polymer solution, 30 parts of Pigment Blue 15:3, 100 parts of a 0.1 mol/L sodium hydroxide aqueous solution, and 30 parts of methyl ethyl ketone were mixed. The mixture was dispersed with 15 passes by an ultrahigh-pressure homogenizer (Ultimizer HJP-25005, manufactured by Sugino Machine Limited) at 200 MPa. The resulting mixture was transferred into another vessel. 300 parts of ion-exchanged water was added thereto, followed by stirring for one hour. The entire methyl ethyl ketone remained but part of the water was removed with a rotary evaporator. The mixture was neutralized with a 0.1 mol/L sodium hydroxide aqueous solution. The pH was adjusted to 9. The mixture was filtered through a 0.3 µm membrane filter. The filtered mixture was adjusted with ion-exchanged water to form pigment dispersoid 1 having a pigment concentration of 15%. The average particle diameter was measured with Microtrac particle size distribution analyzer UPA 250 (manufactured by Nikkiso Co., Ltd.) and found to be 80 nm.

### Pigment dispersoid 2

Pigment dispersoid 2 was prepared in the same way as pigment dispersoid 1, except that Pigment violet 19 (quinacridone pigment, manufactured by Clariant) was used as a pigment. The average particle diameter of the pigment dispersoid 2 was measured as above and found to be 90 nm.

### Pigment dispersoid 3

Pigment dispersoid 3 was prepared in the same way as described above except that Pigment yellow 14 (azo-based pigment, manufactured by Clariant) was used as a pigment. The average particle diameter of the pigment dispersoid 3 was measured as above and found to be 115 nm.

### Pigment dispersoid 4

Pigment dispersoid 4 was prepared using Pigment Blue 15:3 (copper phthalocyanine pigment, manufactured by Clariant) as a pigment. After an atmosphere in a reaction vessel equipped with a stirrer, a thermometer, a reflux condenser, and a dripping funnel was replaced with nitrogen, 80 parts of benzyl acrylate, 5 parts of methacrylic acid, 2 parts of acrylic acid, and 0.3 parts of t-dodecyl mercaptan were charged into the vessel, followed by heating to 70°C. An additionally prepared mixture of 150 parts of benzyl acrylate, 15 parts of methacrylic acid, 5 parts of acrylic acid, 1 part of t-dodecyl mercaptan, and 5 parts of sodium persulfate was charged into a dripping funnel and dripped into the reaction vessel over 4 hours, causing polymerization reaction of dispersion polymer. Next, water was added to the reaction vessel and a dispersion polymer solution of 40% concentration was prepared. As described above, the glass transition temperature was measured and found to be 45°C.

40 parts of the obtained dispersion polymer solution, 30 parts of Pigment Blue 15:3 (copper phthalocyanine pigment, manufactured by Clariant), 100 parts of a 0.1 mol/L sodium hydroxide aqueous solution were mixed, and the mixture was dispersed with an Eiger mill using Zirconia beads during 2 hours. The resulting mixture was transferred to another vessel, 300 parts of ion-exchanged water was added thereto and then further stirred for one hour. It was neutralized with a 0.1 mol/L sodium hydroxide. The pH was adjusted to 9. After that, it was filtered through a 0.3 µm membrane filter, forming dispersoid 4 containing 20% solid powder (dispersion polymer and pigment). The average particle diameter of pigment dispersoid 4 was measured as above, and found to be 100 nm.

### Pigment dispersoid 5

Pigment dispersoid 5 was prepared in the same way as Pigment dispersoid 4 except that Pigment Red 122 (dimethyl quinacridone pigment, manufactured by Clariant) was used as pigment. The average particle diameter of pigment dispersoid 5 was measured as described above and found to be 115 nm.

### Pigment dispersoid 6

Pigment dispersoid 6 was prepared in the same way as Pigment dispersoid 4 except that Pigment Yellow 180 (benzimidazolone based diazo pigment, manufactured by Clariant) was used as pigment. The average particle diameter of pigment dispersoid 6 was measured as described above and found to be 130 nm.

### Preparation of ink composition

An ink jet recording ink was prepared according to the compositions shown in Table 2 with the polymer microparticles and pigment dispersoids obtained as described above. 0.05% of Topside 240 (manufactured by Permachem Asia, Ltd.) for preventing corrosion of the ink, 0.02% of benzotriazole for preventing corrosion of ink jet head members, and 0.04% of ethylenediamine tetraacetic acid disodium salt (EDTA 2Na) for reducing the effect of metal ions in the ink were added to ion-exchanged water serving as water.

**Table 2**

| Examples | | | | | | | | | | | | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 |
| Pigment dispersoid | 1 | 23.5 (3.5) | - | - | - | - | - | 23.3 (3.5) | - | - | - | - | - | 23.3 (3.5) | - | - | - | - | 23.5 (3.5) |
| | 2 | - | 30 (4.5) | - | - | - | - | - | 30 (4.5) | - | - | - | - | - | 30 (4.5) | - | - | - | - |
| | 3 | - | - | 30 (4.5) | - | - | - | - | - | 30 (4.5) | - | - | - | - | - | 30 (4.5) | - | - | - |
| | 4 | - | - | - | 20 (3.0) | - | - | - | - | - | 20 (3.0) | - | - | - | - | - | 20 (3.0) | - | - |
| | 5 | - | - | - | - | 26.7 (4.0) | - | - | - | - | - | 26.7 (4.0) | 33 (3.0) | - | - | - | - | 26.7 (4.0) | - |
| | 6 | - | - | - | - | - | 26.7 (4.0) | - | - | - | - | - | - | - | - | - | - | - | - |
| Polymer microparticle | EM-A | 5 | - | - | - | - | - | - | - | - | - | - | - | - | - | - | - | - | - |
| | EM-B | - | 5 | - | - | - | - | - | - | - | - | - | - | - | - | - | - | - | - |
| | EM-C | - | - | 5 | - | - | - | - | - | - | - | - | - | - | - | - | - | - | - |
| | EM-D | - | - | - | 5 | - | - | - | - | - | - | - | - | - | - | - | - | - | - |
| | EM-E | - | - | - | - | 5 | - | - | - | - | - | - | - | - | - | - | - | - | - |
| | EM-F | - | - | - | - | - | 4 | - | - | - | - | - | - | - | - | - | - | - | - |
| | EM-G | - | - | - | - | - | - | 6 | - | - | - | - | - | - | - | - | - | - | - |
| | EM-H | - | - | - | - | - | - | - | 6 | - | - | - | - | - | - | - | - | - | - |
| | EM-I | - | - | - | - | - | - | - | - | 6 | - | - | - | - | - | - | - | - | - |
| | EM-J | - | - | - | - | - | - | - | - | - | 5 | - | - | - | - | - | - | - | - |
| | EM-K | - | - | - | - | - | - | - | - | - | - | 4.5 | 4.5 | - | - | - | - | - | - |
| | EM-L | - | - | - | - | - | - | - | - | - | - | - | - | 5 | - | - | - | - | - |
| | EM-M | - | - | - | - | - | - | - | - | - | - | - | - | - | 5 | - | - | - | - |
| | EM-N | - | - | - | - | - | - | - | - | - | - | - | - | - | - | 5 | - | - | - |
| | EM-O | - | - | - | - | - | - | - | - | - | - | - | - | - | - | - | 6 | - | - |
| | EM-P | - | - | - | - | - | - | - | - | - | - | - | - | - | - | - | - | 6 | - |
| | EM-Q | - | - | - | - | - | - | - | - | - | - | - | - | - | - | - | - | - | 5 |
| 1,2-hexanediol | | 3 | 3 | 2 | 3 | 3 | 3 | 3 | 2 | 3 | 3 | 3 | 3 | 3 | 3 | 2 | 3 | 3 | 3 |
| 1,2-propanediol | | - | - | 1 | - | - | - | - | 1 | - | - | - | - | - | - | 1 | - | - | - |
| TEGmBE | | 1 | 1 | 2 | 1 | 1 | 1 | 1 | 1 | 1 | 1 | 1 | 1 | 1 | 1 | 2 | 1 | 1 | 1 |
| Surfynol 104 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Surfynol 465 | | 0.5 | 0.3 | 0.5 | 0.5 | 0.3 | 0.5 | 0.3 | 0.5 | 0.5 | 0.3 | 0.5 | 0.3 | 0.5 | 0.3 | 0.5 | .5 | .3 | 0.5 |
| Surfynol 61 | | - | 0.2 | - | - | 0.2 | - | 0.2 | - | - | 0.2 | - | 0.2 | - | 0.2 | - | - | 0.2 | - |
| Glycerin | | 12 | 10 | 10 | 12 | 11 | 12 | 10 | 10 | 12 | 11 | 12 | 10 | 12 | 10 | 10 | 12 | 11 | 12 |
| Trimethylol propane | | 3 | 3 | 3 | 3 | 3 | 3 | 3 | 3 | 3 | 3 | 3 | 3 | 3 | 3 | 3 | 3 | 3 | 3 |
| triethylene glycol | | 5 | 4 | 4 | 5 | 4 | 5 | 4 | 4 | 5 | 4 | 5 | 4 | 5 | 4 | 4 | 5 | 4 | 5 |
| triethanol amine | | 1 | 1 | 1 | 1 | 1 | 1 | 1 | 1 | 1 | 1 | 1 | 1 | 1 | 1 | 1 | 1 | 1 | 1 |
| water | | rest | rest | rest | rest | rest | rest | rest | rest | rest | rest | rest | rest | rest | rest | rest | rest | rest | rest |

In the tables, values in brackets represent concentrations (solid powder) of pigments in the pigment dispersoids, and TEGmBE represents triethylene glycol mono-butyl ether. Surfynol 61, Surfynol 104, and Surfynol 465 are product names manufactured by Air products and chemicals Inc.

### Evaluation of ink composition

### Color fastness test

With the obtained ink, a cotton cloth is subjected to solid printing using an ink jet printer (PX-G930, manufactured by Seiko Epson Corporation) and to heating at 150°C for 5 hours to produce a sample for a color fastness test. With respect to the obtained print sample, dry and wet abrasion fastness tests are performed according to a method of friction tester type II of JIS L0849 of Japan Industrial Standard (JIS). The evaluation tester is a color fastness rubbing tester (AB-301S, manufactured by Tester Sangyo Co., Ltd) and evaluation is performed by 100 times of rubbing under a load of 200g by a rubbing method. With respect to the obtained print sample, a washing fastness test is performed according to a method of JIS L0844B-5 and a dry cleaning test is performed according to a method of JIS L0860. The evaluation results are shown in table 3.

### Jet stability

With respect to each of the obtained inks, evaluation is performed by printing 1000 pages of A4-size paper, XeroxP A4, manufactured by Fuji Xerox Co., Ltd. with an ink jet printer (PX-G930, manufactured by Seiko Epson Corporation) under an environment of 35°C and 35% relative humidity (RH) with Microsoft Word under the following conditions: font size: 11, font type: standard MSP Gothic, and density: 4,000 words per page. Evaluation criteria are as follows:
AA: No print defect is observed, A: One print defect is observed, B: Two or three print defects are observed, C: Four or five print defects are observed, and D: Six or more print defects are observed.

[0092]

**Table 3**

| Examples | Evaluation | | | | | | |
|---|---|---|---|---|---|---|---|
| | Abrasion fastness | | Washing fastness | | dry-cleaning | | jet stability |
| | dry | wet | color transition to cotton | discoloration | color transition to cotton | discoloration | |
| 1 | 5 | 5 | 4/5 | 5 | 5 | 5 | AA |
| 2 | 4/5 | 4/5 | 4 | 5 | 5 | 5 | AA |
| 3 | 4 | 4 | 4/5 | 5 | 5 | 5 | AA |
| 4 | 4 | 4 | 4/5 | 4/5 | 5 | 5 | AA |
| 5 | 4/5 | 4/5 | 3/4 | 4 | 3/4 | 4/5 | A |
| 6 | 4/5 | 4/5 | 4 | 5 | 4 | 5 | B |
| 7 | 3/4 | 4/5 | 4/5 | 5 | 4/5 | 5 | B |
| 8 | 3/4 | 3/4 | 5 | 4/5 | 5 | 3/4 | A |
| 9 | 4 | 4 | 4/5 | 3/4 | 5 | 3/4 | AA |
| 10 | 4/5 | 4/5 | 4 | 5 | 4 | 5 | C |
| 11 | 4 | 4 | 4/5 | 5 | 5 | 5 | C |
| 12 | 3/4 | 3/4 | 4 | 4 | 4 | 4 | C |
| 13 | 1/2 | 112 | 4/5 | 5 | 5 | 5 | A |
| 14 | 4 | 4 | 4 | 2 | 5 | 2/3 | A |
| 15 | 4/5 | 5 | 4/5 | 5 | 5 | 5 | D |
| 16 | 4 | 4 | 4/5 | 1/2 | 2 | 2 | AA |
| 17 | 4 | 4 | 2 | 5 | 2/3 | 5 | A |
| 18 | 2 | 1/2 | 3/4 | 1 | 3 | 3/4 | C |

## Claims

1. An ink composition for ink jet recording, comprising:
(a) a dispersoid comprising a water-dispersible pigment; and
(b) polymer microparticles,
wherein the average dispersion diameter (the cumulative diameter as measured by light scattering) of the dispersoid is 20 to 300 nm,
wherein the polymer microparticles comprise a copolymer comprising (i) at least 70% by weight of alkyl (meth) acrylate repeating units including ethyl acrylate repeating units and (ii) (meth) acrylic acid repeating units, and (iii) repeating units of an ethylene based unsaturated monomer having a saturated or an unsaturated ring,
and wherein the glass transition temperature of the polymer microparticles is 0°C or less and the acid value thereof is 50 mgKOH/g or less.

2. The ink composition according to claim 1, wherein the alkyl (meth) acrylate has 1 to 24 carbon atoms.

3. The ink composition according to any preceding claim, wherein the copolymer comprises 60% to 80% by weight of ethyl acrylate repeating units.

4. The ink composition according to any preceding claim, wherein the content ratio of (i) the alkyl (meth) acrylate and (iii) the ethylenic unsaturated monomer having a saturated or an unsaturated ring is 3:1 to 10:1.

5. The ink composition according to any preceding claim, wherein the ethylenic unsaturated monomer having a saturated or an unsaturated ring is styrene.

6. The ink composition according to any preceding claim, wherein the glass transition temperature of the polymer microparticle is -5 to -25°C.

7. The ink composition according to any preceding claim, wherein the acid value of the polymer microparticle is 30 mgKOH/g or less.

8. The ink composition according to any preceding claim, wherein a weight average molecular weight in terms of styrene by gel permeation chromatography of the polymer microparticle is 100,000 to 1,000,000.

9. The ink composition according to any preceding claim, wherein the dispersoid comprises a dispersion resin having a styrene-based weight average molecular weight, which is measured by gel permeation chromatography, of 10,000 to 200,000.

10. The ink composition according to any preceding claim, wherein the dispersoid comprises a dispersion resin obtained by copolymerizing 50% by weight or more of benzyl acrylate and 15% by weight or less of methacrylic acid and/or acrylic acid.

11. The ink composition according to any preceding claim, wherein a larger amount of the polymer microparticles than the dispersoid on weight basis is contained.

12. The ink composition according to any preceding claim, further comprising 1,2-alkylene glycol.

13. The ink composition according to any preceding claim, further comprising an acetylene glycol based surfactant and/or an acetylene alcohol based surfactant.

14. Use of the ink composition according to any preceding claim in ink jet printing.

15. An ink jet printing method using the ink composition according to any of claims 1-13.

## Patentansprüche

1. Tintenzusammensetzung zum Tintenstrahlaufzeichnen, umfassend:
(a) ein Dispersoid, umfassend ein Wasserdispergierbares Pigment; und
(b) Polymermikroteilchen,
wobei der mittlere Dispersionsdurchmesser (der kumulative Durchmesser gemessen durch Lichtstreuung) des Dispersoid 20 bis 300 nm beträgt,
wobei die Polymermikroteilen ein Copolymer umfassen, das (i) wenigstens 70 Gew.% Alkyl(meth)acrylat-Wiederholungseinheiten einschließlich Ethylacrylat-Wiederholungseinheiten und (ii) (Meth)acrylsäure-Wiederholungseinheiten und (iii) Wiederholungseinheiten eines ungesättigten Monomers auf Basis von Ethylen mit einem gesättigten oder einem ungesättigten Ring umfasst,
und wobei die Glasübergangstemperatur der Polymermikroteilchen 0°C oder weniger und deren Säurezahl 50 mgKOH/g oder weniger beträgt.

2. Tintenzusammensetzung gemäß Anspruch 1, worin das Alkyl(meth)acrylat 1 bis 24 Kohlenstoffatome aufweist.

3. Tintenzusammensetzung gemäß einem vorstehenden Anspruch, worin das Copolymer 60 bis 80 Gew.% Ethylacrylat-Wiederholungseinheiten umfasst.

4. Tintenzusammensetzung gemäß einem vorstehenden Anspruch, worin das Gehaltsverhältnis von (i) dem Alkyl(meth)acrylat und (iii) dem ethylenisch ungesättigten Monomer mit einem gesättigten oder einem ungesättigten Ring 3:1 bis 10:1 beträgt.

5. Tintenzusammensetzung gemäß einem vorstehenden Anspruch, worin das ethylenisch ungesättigte Monomer mit einem gesättigten oder einem ungesättigten Ring Styrol ist.

6. Tintenzusammensetzung gemäß einem vorstehenden Anspruch, worin die Glasübergangstemperatur des Polymermikroteilchens -5 bis -25°C beträgt.

7. Tintenzusammensetzung gemäß einem vorstehenden Anspruch, worin der Säurewert des Polymermikroteilen 30 mgKOH/g oder weniger beträgt.

8. Tintenzusammensetzung gemäß einem vorstehenden Anspruch, worin das gewichtsmittlere Molekulargewicht des Polymermikroteilchens bezogen auf Styrol gemäß Gelpermeationschromatografie 100.000 bis 1.000.000 beträgt.

9. Tintenzusammensetzung gemäß einem vorstehenden Anspruch, worin das Dispersoid ein Dispersionsharz mit einem gewichtsmittleren Molekulargewicht auf Basis von Styrol, das durch Gelpermeationschromatografie gemessen wird, von 10.000 bis 200.000 aufweist.

10. Tintenzusammensetzung gemäß einem vorstehenden Anspruch, worin das Dispersoid ein Dispersionsharz umfasst, das durch Copolymerisieren von 50 Gew.% oder mehr Benzylacrylat und 15 Gew.% oder weniger mit Methacrylsäure und/oder Acrylsäure erhältlich ist.

11. Tintenzusammensetzung gemäß einem vorstehenden Anspruch, worin eine größere Menge der Polymermikroteilchen als des Dispersoids auf Gewichtsbasis enthalten ist.

12. Tintenzusammensetzung gemäß einem vorstehenden Anspruch, ferner umfassend 1,2-Alkylenglycol.

13. Tintenzusammensetzung gemäß einem vorstehenden Anspruch, ferner umfassend ein Tensid auf Basis von Acetylenglycol und/oder ein Tensid auf Basis von Acetylenalkohol.

14. Verwendung der Tintenzusammensetzung gemäß einem vorstehenden Anspruch im Tintenstrahldrucken.

15. Tintenstrahldruckverfahren, das die Tintenzusammensetzung gemäß einem der Ansprüche 1 bis 13 verwendet.

## Revendications

1. Composition d'encre pour un enregistrement par jet d'encre, comprenant :
(a) une matière dispersée comprenant un pigment dispersible dans l'eau ; et
(b) des microparticules de polymère,
dans laquelle le diamètre moyen de dispersion (le diamètre cumulé tel que mesuré par diffusion de la lumière) de la matière dispersée est de 20 à 300 nm,
dans laquelle les microparticules de polymère comprennent un copolymère comprenant (i) au moins 70% en poids de motifs répétitifs de (méth)acrylate d'alkyle comportant des motifs répétitifs d'acrylate d'éthyle et (ii) des motifs répétitifs d'acide (méth)acrylique, et (iii) des motifs répétitifs d'un monomère insaturé à base d'éthylène ayant un cycle saturé ou un cycle non saturé,
et dans laquelle la température de transition vitreuse des microparticules de polymère est de 0°C ou moins et sa valeur d'acide est de 50 mg de KOH/g ou moins.

2. Composition d'encre selon la revendication 1, dans laquelle le (méth)acrylate d'alkyle a 1 à 24 atomes de carbone.

3. Composition d'encre selon l'une des revendications précédentes, dans laquelle le copolymère comprend 60% à 80% en poids de motifs répétitifs d'acrylate d'éthyle.

4. Composition d'encre selon l'une des revendications précédentes, dans laquelle le rapport de teneur de (i) (méth)acrylate d'alkyle et (iii) le monomère à insaturation éthylénique comportant un cycle saturé ou un cycle non saturé est de 3:1 sur 10:1.

5. Composition d'encre selon l'une des revendications précédentes, dans laquelle le monomère à insaturation éthylénique ayant un cycle saturé ou un cycle non saturé est le styrène.

6. Composition d'encre selon l'une des revendications précédentes, dans laquelle la température de transition vitreuse de la microparticule de polymère est de -5 à - 25°C.

7. Composition d'encre selon l'une des revendications précédentes, dans laquelle la valeur d'acide de la microparticule de polymère est de 30 mg de KOH/g ou moins.

8. Composition d'encre selon l'une des revendications précédentes, dans laquelle une masse moléculaire moyenne en poids en termes de styrène par chromatographie par perméation de gel de la microparticule de polymère est de 100.000 à 1.000.000.

9. Composition d'encre selon l'une des revendications précédentes, dans laquelle la matière dispersée comprend une résine de dispersion ayant une masse moléculaire moyenne en poids à base de styrène, qui est mesuré par chromatographie par perméation de gel, de 10.000 à 200.000.

10. Composition d'encre selon l'une des revendications précédentes, dans laquelle la matière dispersée comprend une résine de dispersion obtenue par copolymérisation de 50% en poids ou plus d'acrylate de benzyle et de 15% en poids ou moins d'acide méthacrylique et/ou d'acide acrylique.

11. Composition d'encre selon l'une des revendications précédentes, dans laquelle une quantité des microparticules de polymère plus grande que la matière dispersée sur la base du poids est contenue.

12. Composition d'encre selon l'une des revendications précédentes, comprenant en outre 1,2-alkylène glycol.

13. Composition d'encre selon l'une des revendications précédentes, comprenant en outre un agent tensio-actif à base de glycol acétylène et/ou un agent tensio-actif à base d'alcool acétylène.

14. Utilisation de la composition d'encre selon l'une des revendications précédentes dans l'impression à jet d'encre.

15. Procédé d'impression à jet d'encre utilisant la composition d'encre selon l'une des revendications 1 à 13.
